Europäisches Patentamt

European Patent Office

Office européen des brevets

(19)

(11) Publication number : **0 430 497 B1**

(12) **EUROPEAN PATENT SPECIFICATION**

(45) Date of publication of patent specification :
02.08.95 Bulletin 95/31

(51) Int. Cl.⁶ : **G11B 7/09**

(21) Application number : **90312462.6**

(22) Date of filing : **15.11.90**

(54) **Optical disc servo apparatus.**

(30) Priority : **30.11.89 JP 311722/89**

(43) Date of publication of application :
**05.06.91 Bulletin 91/23**

(45) Publication of the grant of the patent :
**02.08.95 Bulletin 95/31**

(84) Designated Contracting States :
**DE FR GB NL**

(56) References cited :
**EP-A- 0 247 829**
**EP-A- 0 331 475**
**PATENT ABSTRACTS OF JAPAN vol. 9, no. 6**
**(P-326)(1729) 11 January 1985 & JP-A-59 154**
**629 ( NIPPON VICTOR ) 3 September 1984**

(73) Proprietor : **SONY CORPORATION**
**7-35 Kitashinagawa 6-chome**
**Shinagawa-ku**
**Tokyo 141 (JP)**

(72) Inventor : **Iimura, Shinichiro, c/o Patents Div.**
**Sony Corp.**
**6-7-35 Kitashinagawa**
**Shinagawa-ku Tokyo 141 (JP)**

(74) Representative : **Thomas, Christopher Hugo et al**
**D. Young & Co,**
**21 New Fetter Lane**
**London EC4A 1DA (GB)**

EP 0 430 497 B1

## Description

This invention relates to optical disc servo apparatus.

A push-pull method and a three-spot method are known for servo control, for example, tracking servo, of an optical disc. Automatic gain control (AGC) is necessary for such servo systems. That is, AGC is provided to correct for variations in the amplitude of a tracking error signal derived from the optical disc or optical pick-up.

A wobbling method is known as an example of push-pull type tracking servo. With the wobbling method, disturbances are applied while the tracking servo is performed, gains before and after application of the disturbances are compared, and the gain is normalized. However, this method has the problems that the calibration is difficult because of mutual interference, and the circuit is complicated and expensive.

In another push-pull method, a signal obtained by dividing the difference between tracking error signals obtained from two 2-part photo detectors by the sum of the tracking error signals obtained by the two photo detectors is used for the gain control of an AGC circuit.

However, in the case of one beam push-pull, a level change of the difference signal and a level change of the sum signal differ depending on the depth of a groove or pit, so that proper calibration cannot be executed.

European Published Patent Application EP-A-0 247 829 discloses an optical disc servo apparatus having an automatic gain control circuit responsive to a detected peak-to-peak value of an error signal.

According to the present invention there is provided a servo apparatus of an optical disc, the apparatus comprising:
amplitude detecting means for detecting the amplitude of a servo detection signal extracted by an optical pick-up with a focusing servo operating;
gain control signal generating means for generating a gain control signal to provide a predetermined relation between the amplitude detected by the amplitude detecting means and a reference value; and
control means for holding the gain control signal which is generated by the gain control signal generating means and for controlling the amplitude of the servo detection signal by the gain control signal upon recording or reproducing operation by the optical pick-up;
characterized in that said gain control signal generating means has memory means for storing gain control signals corresponding to at least three points: the inner rim, the outer rim, and an intermediate position between the inner and outer rims, of the optical disc, which were obtained before the recording or reproducing operation by the optical pick-up is started.

The invention will now be described by way of example with reference to the accompanying drawings, throughout which like parts are referred to by like references, and in which:

Figure 1 is a block diagram of an embodiment of the present invention;

Figure 2 is a block diagram of an AGC circuit;

Figure 3 is a schematic diagram for explaining a 4-part detector;

Figure 4 is a circuit diagram of a gain control amplifier;

Figures 5A to 5D are diagrams showing detection and holding of a tracking error signal and its peak level, respectively;

Figure 6 is a diagram for explaining characteristics of a D/A converter;

Figure 7 is a circuit diagram of another AGC circuit; and

Figures 8A to 8D are diagrams showing a pull-in and a focusing error signal, respectively.

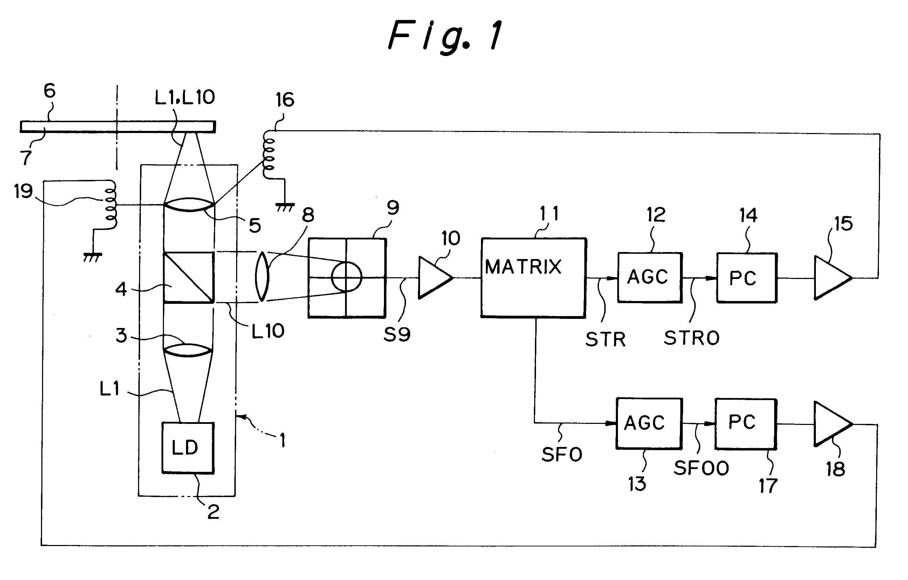

The embodiment to be described with reference to Figures 1 to 6 is applied to the tracking servo of an optical disc. Figure 1 shows an optical pick-up 1 of the optical disc drive, and a tracking servo system and a focusing servo system.

In the optical pick-up 1, a laser beam L1 is emitted from a laser diode 2, and converted into a parallel beam by a collimating lens 3 before passing through a beam splitter 4. After that, the parallel laser beam is focused by an objective lens 5 onto a surface (hereinafter referred to as a pit forming surface) 7 of an optical disc 6 in which pits are formed.

A laser beam L10 which has been reflected by the pit forming surface 7 passes from the beam splitter 4 through a cylindrical lens 8 and forms an image on a photo detector 9 divided into four detecting portions. An output signal S9 from the 4-part detector 9 is supplied to a matrix circuit 11 through a head amplifier 10.

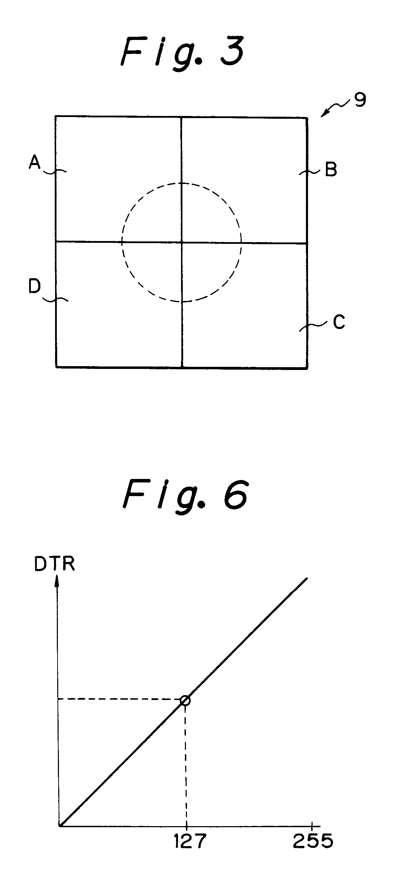

In the matrix circuit 11, a tracking error signal STR and a focusing error signal SFO are formed by adding and subtracting levels of output signals S9A to S9D of each area A to D of the detector 9. That is, as shown in Figure 3, in the respective areas A, B, C and D, assuming that signals which are formed from beam spots shown by broken lines are set to S9A, S9B, S9C and S9D, the tracking error signal STR is given by:

$$STR = [(S9A + S9D) - (S9B + S9C)]$$

The focusing error signal SFO, on the other hand, is given by:

$$SFO = [(S9A + S9C) - (S9B + S9D)]$$

The above tracking error signal STR is supplied to an AGC circuit 12. The focusing error signal SFO is supplied to an AGC circuit 13.

In the AGC circuit 12, since the tracking error signal STR is calibrated, a tracking error signal STR0 from which influences such as eccentricity of the optical disc 6, variations in the optical pick-up 1, and the like are eliminated is obtained. The tracking error signal STR0 passes through a phase compensating circuit 14 and a driving amplifier 15 and is supplied to a tracking coil 16. In the tracking coil 16, tracking servo is performed on the basis of the tracking error signal STR0 which is supplied from the driving amplifier 15.

In the AGC circuit 13, a focusing error signal SFO0 from which various influences have been eliminated by calibrating the focusing error signal SFO in a manner similar to the above tracking error signal STR0 is derived. The focusing error signal SFO0 passes through a phase compensating circuit 17 and a driving amplifier 18 and is supplied to a focusing coil 19. In the focusing coil 19, focusing servo is performed on the basis of the focusing error signal SFO0 which is supplied from the driving amplifier 18.

The calibration which is done prior to executing the recording or reproduction by loading the optical disc 6 will now be explained.

There is a case where the amplitude of a signal from the AGC circuit 12 changes and does not become constant, due to causes such as eccentricity of the optical disc 6, variation in accuracy of the optical pick-up 1, and the like. Therefore, it is necessary to calibrate the gain of the AGC circuit 12 before recording or reproduction is effected with the optical disc 6.

The gain is calibrated in the following manner. First, a coefficient K1 of the calibration of three points corresponding to, for example, the inner rim, the outer rim, and an intermediate position between the inner and outer rims of the optical disc 6 is previously obtained in a state in which only the focusing servo is turned on and the tracking servo is turned off.

Then, by controlling the gain of the AGC circuit 12 by the above coefficient K1 of the calibration during an actual recording or reproducing operation, the influences of eccentricity of the track on the optical disc 6, variation of the optical pick-up 1, and the like, on the tracking error signal STR are eliminated. The calibrated tracking error signals STR and STR0 are thus obtained.

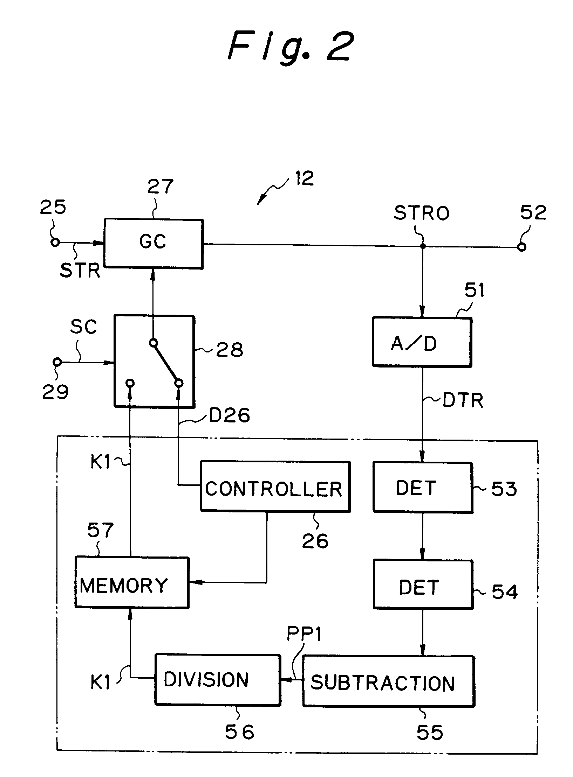

The tracking error signal STR is supplied from the matrix circuit 11 to the AGC circuit 12. A construction of the AGC circuit 12 is shown in Figure 2.

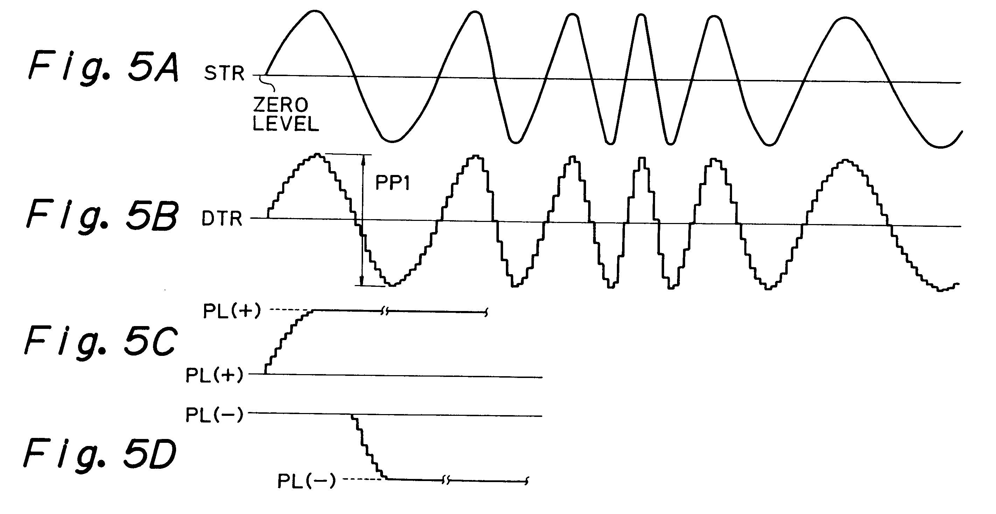

The tracking error signal STR which is supplied from a terminal 25 has a waveform, for instance, as shown in Figure 5A. Since the waveform crosses a plurality of tracks on the optical disc 6 in the OFF state of the tracking servo, the period is changed, while intersecting the zero level. The intersection point of the zero level denotes a timing when a beam spot which is irradiated from the pick-up 1 crosses the track.

Upon calibration, a control signal D26 which is supplied from a controller 26 and sets the gain of a gain control amplifier 27 to one is selected by a switch 28 and is supplied to the gain control amplifier 27. A signal Sc to control the switching of the switch 28 is supplied through a terminal 29.

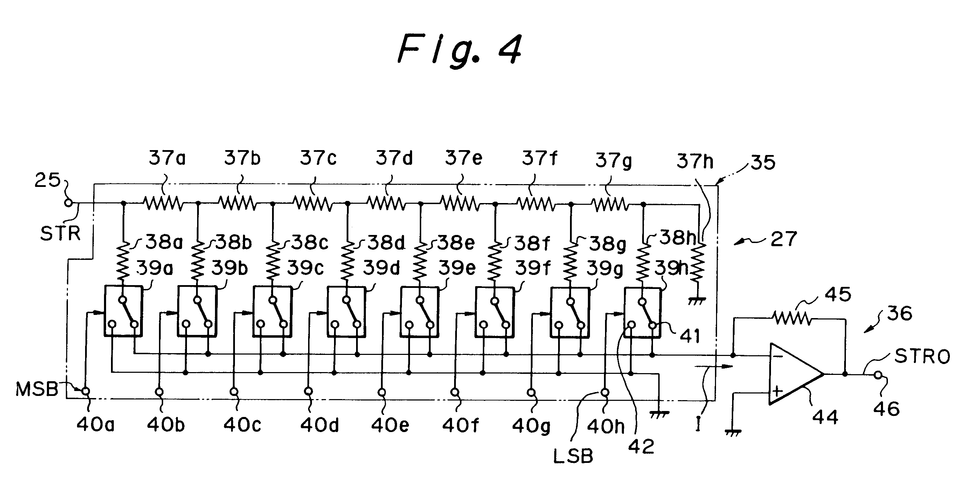

The gain control amplifier 27 is shown in Figure 4. The gain control amplifier 27 has a construction such that a current/voltage converting circuit 36 is provided for a digital-to-analogue (D/A) converter 35 using a resistance ladder of R-2R. That is, one end of each of resistors 37a and 38a is connected to the terminal 25 to which the tracking error signal STR is supplied. The other end of the resistor 38a is connected to a switch 39a.

Constructions similar to that of the resistors 37a and 38a and the switch 39a which are at the side of the most significant bit (MSB) are used for each other bit from the MSB side to the least significant bit (LSB) side. The values of resistors 37a and 37g are set to R, and the values of resistors 37h and 38a to 38h are set to 2R.

Switches 39a to 39h are controlled on the basis of the values of the respective bits of the 8-bit control signal D26 which are supplied from the controller 26 through the switch 28 and terminals 40a to 40h. Each of the switches 39a to 39h is connected to, for example, the side of a terminal 41 when a certain bit of the control signal D26 is at the high level ("1"), while it is connected to a terminal 42 on the earth side when a certain bit of the control signal D26 is at the low level ("0"). Although not described in detail, the above switching operation is similarly executed with respect to all of the switches 39a to 39h. The terminal 42 is connected to earth and the terminal 41 is connected to the current/voltage converting circuit 36.

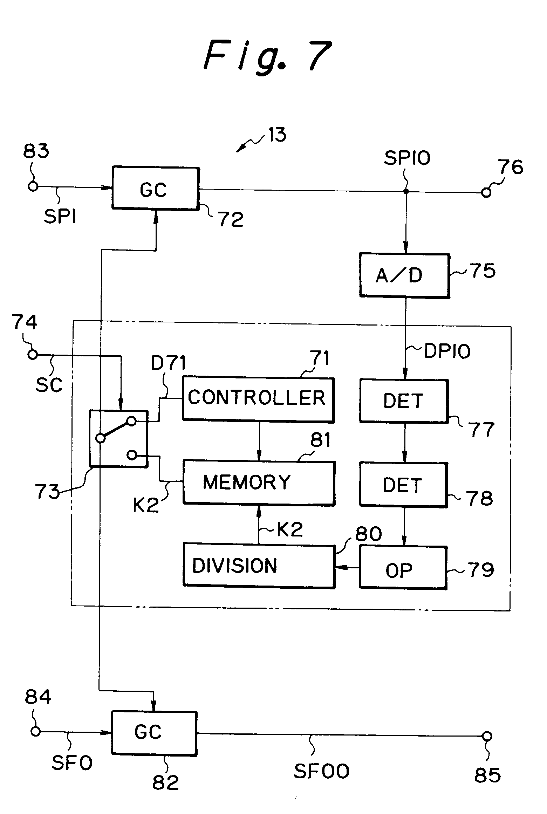

The D/A converter 35 has characteristics as shown in Figure 6. Since the control signal comprises eight bits, a unit of the conversion, that is, a unit of the control is set to (an input voltage) x (1/256). In this case, since the level of the tracking error signal STR0 which is supplied is set to at most (an input voltage) x (255/256), an attenuating operation is performed.

The current/voltage converting circuit 36 is constructed such that a resistor 45 is connected between a minus side input terminal of an operational amplifier 44 and an output terminal thereof. A current I from the D/A converter 35 is converted into voltage. The voltage, that is, the tracking signal STR0 is supplied through a terminal 46 to an analogue-to-digital (A/D) converter 51 of the AGC circuit 12 and is extracted from a terminal 52. When a value of the resistor 45 of the current/voltage converting circuit 36 is increased by, for instance, n times, the level of the tracking error signal STR0 is also increased by n times.

The tracking error signal STR0 is converted by the A/D converter 51 into a tracking error signal DTR which was quantized as shown in, for example, Figure 5B. The tracking error signal DTR is supplied to a positive peak detecting circuit 53 and a negative peak detecting circuit 54 and the amplitude is measured.

In the positive peak detecting circuit 53, when a peak on the positive side is detected as shown in Figure 5C on the basis of the quantized tracking error signal DTR of Figure 5B, a peak level PL(+) is held. On the other hand, in the negative peak detecting circuit 54, when a peak on the negative side is detected as shown in Figure 5D on the basis of the quantized tracking error signal DTR of Figure 5B, a peak level (PL(-) is held. The positive side peak level PL(+) and the negative side peak level PL(-) are supplied to a subtracting circuit 55.

In the subtracting circuit 55, a peak value PP1 (peak to peak) is obtained. That is, the peak value PP1 is calculated by the following equation and the peak value PP1 is supplied to a dividing circuit 56:

$$PP1 = [PL(+) - PL(-)]$$

In the dividing circuit 56, an inverse number is calculated by dividing the peak value PP1 by a predetermined reference value Ref1, so that the coefficient K1 as a gain control signal is obtained:

$$K1 = [1/(PP1/Ref1)] = (Ref1/PP1)$$

If Ref1 < PP1 in the above equation, the coefficient K1 is set to K1 is set to $K1 \leqq 1$. The coefficient K1 is stored in a memory 57.

A microprocessor can also be used as the circuit block surrounded by an alternate long and short dash line, that is, the positive peak detecting circuit 53, the negative peak detecting circuit 54, the subtracting circuit 55, the dividing circuit 56, the memory 57, the controller 26, and the like.

After the above calibration has been executed at, for example, three points corresponding to the inner rim, the outer rim, and an intermediate position between the inner and outer rims of the optical disc 6, the ordinary recording or reproducing operation is started.

Upon recording or reproduction, the value of the coefficient K1 corresponding to the position of the optical disc 6 which was obtained by the above calibration is output from the memory 57 on the basis of the control of the controller 26 and is supplied to the gain control amplifier 27 through the switch 28.

In the gain control amplifier 27, by controlling the switches 39a to 39h of the gain control amplifier 27 by the value of the coefficient K1 mentioned above, the value of the coefficient K1 is multiplied to the tracking error signal STR which is supplied to the terminal 25. Therefore, an amplitude of the tracking error signal STR0 which is supplied is calibrated.

Due to this, even if eccentricity occurs in a track on the optical disc 6, the calibration can be performed and the tracking servo can be executed.

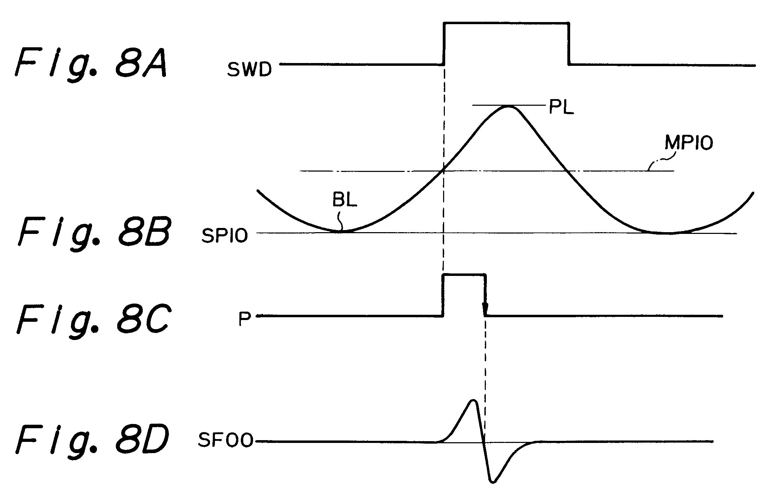

A modified embodiment will now be described with reference to Figures 7 and 8, and will be explained for a case where the invention is applied to the focusing servo of an optical disc.

This embodiment differs from the foregoing embodiment in the construction of the AGC circuit 13, in a signal which is used for the servo control, and in that both of the focusing servo and the tracking servo are turned on upon calibration. Since the other construction is similar to the above embodiment, the overlapping description is omitted.

In the case of the focusing servo, a process similar to the case of the tracking error signal STR is executed by using a pull-in signal SPI. The pull-in signal SPI is supplied to the AGC circuit 13. The pull-in signal SPI corresponds to the sum of the output signals S9A to S9D which are derived from the areas A to D of the detector 9, and corresponds to a signal to obtain the pull-in timing of the focusing servo and also corresponds to a DC component of an RF signal.

The construction of the AGC circuit 13 is shown in Figure 7.

Upon calibration, a control signal D71 which is supplied from a controller 71 and sets a gain of a gain control amplifier 72 to one is selected by a switch 73 and is supplied to gain control amplifiers 72 and 82. The signal Sc to control the switching of the switch 73 is supplied through a terminal 74.

The pull-in signal SPI is set to a pull-in signal SPI0 through the gain control amplifier 72 whose gain is equal to one. The pull-in signal SPI0 is supplied to an A/D converter 75 and is extracted from a terminal 76.

The pull-in signal SPI0 is set to a pull-in signal DPI0 which is quantized by the A/D converter 75. The pull-in signal SPI0 is supplied to a peak detecting circuit 77 and a bottom detecting circuit 78, and the amplitude is measured.

In the peak detecting circuit 77, a peak is detected on the basis of the quantized pull-in signal DPI0 and a peak level PL is held. On the other hand, in the bottom detecting circuit 78, a bottom is detected on the basis of the quantized pull-in signal DPI0 and a bottom level BL is held. The peak level PL and the bottom level BL are supplied to an operating circuit 79.

In the operating circuit 79, a mean value MPI0 of the pull-in signal DPI0 is obtained. That is, the mean value MPI0 is obtained by the calculation of the following equation. The mean value MPI0 is supplied to a dividing circuit 80.

$$MPI0 = [(peak\ level\ PL - bottom\ level\ BL) - 2]$$

In the dividing circuit 80, an inverter number is calculated by dividing the mean value MPI0 by a predetermined reference value Ref2, so that a coefficient K2 as a gain control signal is obtained:

$$K2 = [1/MPI0/Ref2)] = (Ref2/MPI0)$$

If Ref2 < MPI0, the coefficient K2 is set such that $K2 \leqq 1$ and the coefficient K2 is supplied to a memory 81. Since the constructions of the gain control amplifiers 72 and 82 are similar to that of the gain control amplifier 27 in the above embodiment, the overlapping description is omitted. On the other hand, the pull-in signal SPI is supplied to a terminal 83 on the input side. The focusing error signal SFO is supplied to a terminal 84. The gain controlled pull-in signal SPI0 is extracted from the terminal 76. The focusing error signal SFO0 is extracted from a terminal 85.

In a circuit at the next stage on the output side of the AGC circuit 13, the pull-in signal SPI0 shown in Figure 8B is sampled within the width of a window signal SWD shown in Figure 8A. When the pull-in signal SPI0 reaches a predetermined level, a pulse P shown in Figure 8C is formed and the focusing servo is executed by using the pulse P and the focusing error signal SFO0.

After the above calibration has been executed at three points corresponding to the inner rim, the outer rim, and an intermediate position between the outer and inner rims of the optical disc 6, the ordinary recording or reproducing operation is started.

Upon recording or reproduction, the value of the coefficient K2 corresponding to the position on the optical disc 6 which was obtained by the above calibration is output from the memory 81 under control of the controller 71, and is supplied to the gain control amplifiers 72 and 82 through the switch 73.

In the gain control amplifiers 72 and 82, the value of the coefficient K2 is multiplied by an amplitude of the pull-in signal SPI which is supplied to the terminal 83 and by an amplitude of the focusing error signal SFO which is supplied to the terminal 84. Therefore, the amplitudes of the pull-in signal SPI0 and the focusing error signal SFO0 which are supplied are calibrated.

In this embodiment, the tracking servo has been set to ON. However, the invention can be also embodied in the OFF state. On the other hand, although this embodiment has been described with respect to an example in which the calibration is previously executed, the invention is not limited to it and the calibration can be also performed in a real-time manner while rotating the optical disc 6.

Thus with embodiments of the invention, the servo detection signal can be calibrated without being influenced by disturbances such as noise, using a simple circuit construction, and the invention be applied to all of the tracking servo methods.

## Claims

1. A servo apparatus of an optical disc (6), the apparatus comprising:
   amplitude detecting means (12, 13) for detecting the amplitude of a servo detection signal extracted by an optical pick-up (1) with a focusing servo operating;
   gain control signal generating means (12, 13) for generating a gain control signal to provide a predetermined relation between the amplitude detected by the amplitude detecting means (12, 13) and a reference value; and
   control means (12, 13) for holding the gain control signal which is generated by the gain control signal generating means (12, 13) and for controlling the amplitude of the servo detection signal by the gain control signal upon recording or reproducing operation by the optical pick-up (1);

characterized in that said gain control signal generating means (12, 13) has memory means (57, 81) for storing gain control signals corresponding to at least three points: the inner rim, the outer rim, and an intermediate position between the inner and outer rims, of the optical disc (6), which were obtained before the recording or reproducing operation by the optical pick-up (1) is started.

2. Apparatus according to claim 1 wherein said control means controls the amplitude of the servo detection signal by multiplying the gain control signal by the servo detection signal.

3. Apparatus according to claim 1 wherein said servo detection signal is a tracking error signal.

4. Apparatus according to claim 1 wherein said amplitude detecting means (12) is a peak value detecting means (53, 54) for detecting a peak value of the servo detection signal.

5. Apparatus according to claim 4 wherein said gain control signal generating means (120) is such that after the peak value detected by said peak value detecting means (53, 54) has been divided by a predetermined reference value, an inverse number of the resultant value of the division is calculated, thereby generating the gain control signal.

6. Apparatus according to claim 1 wherein said control means (12) multiplies said gain control signal from the gain control signal generating means by the servo detection signal.

7. Apparatus according to claim 1, wherein said servo detection signal is a focusing error signal, a tracking servo is operating and said optical pick-up (1) has divided detectors (9).

8. Apparatus according to claim 7 wherein said amplitude detecting means (13) is peak value detecting means (77, 78) for detecting a peak value and a bottom value of a sum signal from the divided detectors (9).

9. Apparatus according to claim 8 wherein said gain control signal generating means (13) is such that after the average value of the peak values which were detected by the peak value detecting means (77, 78) has been divided by a predetermined reference value, an inverse number of the resultant value of the division is calculated, thereby generating the gain control signal.

10. Apparatus according to claim 8 wherein said control means (13) multiplies the gain control signal from said gain control signal generating means (13) by each of the focusing error signal and the sum signal.

## Patentansprüche

1. Servoeinheit für eine optische Platte (6)

    mit einer Amplitudendetektoreinrichtung (12, 13) zum Detektieren der Amplitude eines von einem optischen Abtaster (1) mit Fokussierungs-Servosteuerung extrahierten Servodetektorsignals,

    mit einer Verstärkungssteuersignal-Generatoreinrichtung (12, 13) zur Erzeugung eines Verstärkungssteuersignals für die Herstellung einer vorbestimmten Relation zwischen der von dem Amplitudendetektoreinrichtung (12, 13) detektierten Amplitude und einem Referenzwert,

    sowie mit einer Steuereinrichtung (12, 13) zum Halten des von der Verstärkungssteuersignal-Generatoreinrichtung (12, 13) erzeugten Verstärkungssteuersignals und zur Steuerung der Amplitude des Servodetektorsignals durch das Verstärkungssteuersignal bei der Aufnahme oder Wiedergabe durch den optischen Abtaster (1),

    **dadurch gekennzeichnet,**

    daß die Verstärkungssteuersignal-Generatoreinrichtung (12, 13) Speichermittel (57, 81) zur Speicherung von Verstärkungssteuersignalen aufweist, die wenigstens drei Punkten der optischen Platte (6), nämlich dem inneren Rand, dem äußeren Rand und einer Zwischenposition zwischen dem inneren Rand und dem äußeren Rand, entsprechen und vor dem Beginn der Aufnahme oder Wiedergabe durch den optischen Abtaster (1) gewonnen wurden.

2. Servoeinheit nach Anspruch 1, bei der die Steuereinrichtung die Amplitude des Servodetektorsignals durch Multiplizieren des Verstärkungssteuersignals mit dem Servodetektorsignal steuert.

3. Servoeinheit nach Anspruch 1, bei der das Servodetektorsignal ein Spurfehlersignal ist.

4. Servoeinheit nach Anspruch 1, bei der die Amplitudendetektoreinrichtung (12) eine Spitzenwertdetektoreinrichtung (53, 54) zur Detektierung des Spitzenwerts des Servodetektorsignals ist.

5. Servoeinheit nach Anspruch 4, bei der die Verstärkungssteuersignal-Generatoreinrichtung (120) so ausgebildet ist, daß nach der Division des von der Spitzenwertdetektoreinrichtung (53, 54) detektierten Spitzenwerts durch einen vorgegebenen Referenzwert eine inverse Zahl des sich aus der Division ergebenden Werts berechnet und dadurch das Verstärkungssteuersignal erzeugt wird.

6. Servoeinheit nach Anspruch 1, bei der die Steuereinrichtung das Verstärkungssteuersignal aus der Verstärkungssteuersignal-Generatoreinrichtung mit dem Servodetektorsignal multipliziert.

7. Servoeinheit nach Anspruch 1, bei der das Servodetektorsignal ein Fokussierungsfehlersignal ist, eine Spurführungsservoeinrichtung wirksam ist und der optische Abtaster (1) verteilte Detektoren aufweist.

8. Servoeinheit nach Anspruch 7, bei der die Amplitudendetektoreinrichtung (13) eine Spitzenwertdetektoreinrichtung (77, 78) zur Detektierung des Spitzenwerts und des Tiefstwerts eines von den verteilten Detektoren (9) stammenden Summensignals ist.

9. Servoeinheit nach Anspruch 8, bei der die Verstärkungssteuersignal-Generatoreinrichtung (13) so ausgebildet ist, daß nach der Division des Mittelwerts der von der Spitzenwertdetektoreinrichtung (77, 78) detektierten Spitzenwerte durch einen vorgegebenen Referenzwert eine inverse Zahl des sich aus der Division ergebenden Werts berechnet und dadurch das Verstärkungssteuersignal erzeugt wird.

10. Servoeinheit nach Anspruch 8, bei der die Steuereinrichtung (13) das Verstärkungssteuersignal aus der Verstärkungssteuersignal-Generatoreinrichtung (13) sowohl mit dem Fokussierungsfehlersignal als auch mit dem Summensignal multipliziert.

## Revendications

1. Dispositif d'asservissement pour un disque optique (6), le dispositif comprenant:
    - des moyens de détection d'amplitude (12, 13) pour détecter l'amplitude d'un signal de détection d'asservissement obtenu par un capteur optique (1) avec un système asservi de focalisation fonctionnant;
    - des moyens générateurs de signal de commande (12, 13) pour produire un signal de commande de gain pour fournir une relation prédéterminée entre l'amplitude détectée par les moyens de détection d'amplitude (12, 13) et une valeur de référence; et
    - des moyens de commande (12, 13) pour maintenir le signal de commande de gain qui est produit par les moyens générateurs de signal de commande de gain (12, 13) et pour commander l'amplitude du signal de détection d'asservissement par le signal de commande de gain lors d'une opération d'enregistrement ou de reproduction par le capteur optique (1),

caractérisé en ce que lesdits moyens générateurs de signal de commande (12, 13) ont des moyens formant mémoire (57, 81) pour mémoriser des signaux de commande de gain correspondant à au moins trois points: le bord intérieur, le bord extérieur et une position intermédiaire entre les bords intérieur et extérieur du disque optique (6), qui ont été obtenus avant que l'opération d'enregistrement ou de reproduction par le capteur optique (1) soit commencée.

2.  Dispositif selon la revendication 1, dans lequel lesdits moyens de commande commandent l'amplitude du signal de détection d'asservissement en multipliant le signal de commande de gain par le signal de détection d'asservissement.

3.  Dispositif selon la revendication 1, dans lequel ledit signal de détection d'asservissement est un signal d'erreur de suivi de piste.

4.  Dispositif selon la revendication 1, dans lequel lesdits moyens de détection d'amplitude (12) sont des moyens de détection de valeur de crête (53, 54) pour détecter une valeur de crête du signal de détection d'asservissement.

5.  Dispositif selon la revendication 4, dans lequel lesdits moyens générateurs de signal de commande de gain (120) sont tels qu'après que la valeur de crête détectée par lesdits moyens de détection de valeur de crête (53, 54) a été divisée par une valeur de référence prédéterminée, un nombre inverse de la valeur résultante de la division est calculé, ce qui produit le signal de commande de gain.

6.  Dispositif selon la revendication 1, dans lequel lesdits moyens de commande (12) multiplient ledit signal de commnade de gain issu des moyens générateurs de signal de commande de gain par le signal de détection d'asservissement.

7.  Dispositif selon la revendication 1, dans lequel ledit signal de détection d'asservissement est un signal d'erreur de focalisation, un système asservi de suivi de piste fonctionne et ledit capteur optique (1) a des détecteurs divisés (9).

8.  Dispositif selon la revendication 7, dans lequel lesdits moyens détecteurs d'amplitude (13) sont des moyens détecteurs de valeur de crête (77, 78) pour détecter une valeur de crête et une valeur de fond d'un signal somme issu des détecteurs divisés (9).

9.  Dispositif selon la revendication 8, dans lequel lesdits moyens générateurs de signal de commande de gain (13) sont tels qu'après que les valeurs de crête qui ont été détectées par les moyens détecteurs de valeur de crête (77, 78) ont été divisées par une valeur de référence prédéterminée, un nombre inverse de la valeur résultante de la division est calculé, ce qui produit le signal de commande de gain.

10. Dispositif selon la revendication 8, dans lequel lesdits moyens de commande (13) multiplient le signal de commande de gain issu desdits moyens générateurs de signal de commande de gain (13) par chacun du signal d'erreur de focalisation et du signal somme.

Fig. 1

EP 0 430 497 B1

# Fig. 2

# Fig. 3

# Fig. 6

Fig. 4

Fig. 5A

Fig. 5B

Fig. 5C

Fig. 5D

EP 0 430 497 B1

# Fig. 7

*Fig. 8A* SWD

*Fig. 8B* SPIO

PL

MPIO

BL

*Fig. 8C* P

*Fig. 8D* SFOO

EP 0 430 497 B1